# EUROPÄISCHE PATENTSCHRIFT

(11) **EP 1 703 268 B1**
(45) Veröffentlichungstag und Bekanntmachung des Hinweises auf die Patenterteilung: **10.06.2009**
(21) Anmeldenummer: 05026779.8
(22) Anmeldetag: 08.12.2005
(51) Int. Cl.: G01M 13/04, G01N 19/04, G01N 3/56

(54) **Verfahren und Vorrichtung zur Überprüfung der Haftfestigkeit von Gleitschichten von Gleitlagerbuchsen**
Method and device for assessing the adhesive strength of sliding layers of plain bearing bushes
Procédé et dispositif destiné à la vérification de l'adhérence de couches de glissement de coussinets lisses

(30) Priorität: 16.03.2005 DE 102005013204
(43) Veröffentlichungstag der Anmeldung: 20.09.2006
(73) Patentinhaber: Federal-Mogul Wiesbaden GmbH, 65201 Wiesbaden (DE)
(72) Erfinder: Aubele, Thomas, 55278 Undenheim (DE); Weil, Gerhard, 65597 Hünfelden (DE); Wilhelm, Maik, 55270 Ober-Olm (DE)
(74) Vertreter: Fuchs

(56) Entgegenhaltungen:
- DE-A1- 4 410 639
- DE-A1- 19 650 616
- US-A- 4 000 656
- US-A- 5 239 864
- BAUDRY G ET AL: "FATIGUE PROPERTY EVALUATION OF BEARING STEELS ISSUED FROM ROTARY CONTINUOUS CASTING" CAHIERS D'INFORMATIONS TECHNIQUES DE LA REVUE DE METALLURGIE, REVUE DE METALLURGIE. PARIS, FR, Bd. 89, Nr. 10, 1. Oktober 1992 (1992-10-01), Seiten 877-886, XP000336836 ISSN: 0035-1563

## Beschreibung

Die Erfindung betrifft ein Verfahren zur Überprüfung der Haftfestigkeit von auf der Innenseite von Gleitlagerbuchsen angebrachten Gleitschichten. Die Erfindung bezieht sich auch auf eine Vorrichtung zur Überprüfung der Haftfestigkeit.

Gleitlagerbuchsen weisen in der Regel einen Stahlrücken und eine Gleitschicht auf, die aus einem Kunststoffmaterial oder einer metallischen Legierung bestehen können. Zwischen der Gleitschicht und dem Stahlrücken ist häufig eine Sinterschicht angeordnet, die z. B. aus Sinterbronze bestehen kann. Derartige Gleitlagerbuchsen sollen mit dem erfindungsgemäßen Verfahren überprüft werden.

Gleitlagerbuchsen dienen in der Regel zur Lagerung von rotierenden Wellen, wobei das Schmiermittel im Schmiermittelspalt in Umfangsrichtung bewegt wird. Hierbei baut sich eine hydrodynamische Schmierung auf.

Es gibt jedoch darüber hinaus auch Anwendungen, bei denen das Schmiermittel gleichzeitig in axialer Richtung strömt, was in der Gleitschicht und gegebenenfalls in den darunter liegenden Schichten zu einer Strömungserosion führen kann. Diese Strömungserosion kann zur Ablösung der Gleitschicht und damit zum Ausfall der Lagerbuchse führen.

Derartige Strömungsverhältnisse herrschen beispielsweise in Dieseleinspritzpumpen, in denen der Dieselkraftstoff die Funktion des Schmiermittels übernimmt. Die Buchsen dienen dort insbesondere zur Lagerung von Exzenterwellen mit der Folge, dass die Lagerbuchsen periodisch auch in radialer Richtung belastet werden, so dass in dem sich hierbei verbreiternden Schmierspalt hohe axiale Strömungsgeschwindigkeiten ausbilden können. Je höher die Strömungsgeschwindigkeit ist, desto größer ist die Gefahr der Strömungserosion.

Durch die Strömung wird die Gleitschicht einer hohen Scherbelastung ausgesetzt. Es ist daher wünschenswert, diese Scherbelastung unter verschiedenen Bedingungen zu simulieren und die Haftfestigkeit der Gleitschicht zu testen.

Bisher sind nur Prüfverfahren und Vorrichtungen bekannt geworden, mit denen die Zugfestigkeit von Schichten eines ebenen Verbundmaterials überprüft werden kann.

Aus der EP 0 212 694 ist ein Prüfverfahren bekannt, das unter Einsatz einer Testvorrichtung gemäß ISO 4624 die Haftung einer Gleitschicht auf einer Bronzeschicht eines ebenen Mehrschichtgleitlagerwerkstoffes ermittelt. Hierbei wird die aufgerauhte ebene Stirnfläche eines Prüfstempels der Testvorrichtung mit der Gleitschicht verklebt.

Dieses Verfahren ist aufwendig und vermittelt keine Erkenntnisse über die Scherbelastbarkeit der Gleitschicht, die u. a. durch Strömung eines flüssigen Mediums verursacht wird.

Je nach Einsatzgebiet wird die Gleitlagerbuchse auch axial, und hier meist stoß- oder pulsartig belastet, wobei die sich durch die Buchse erstreckende Welle jeweils eine Durchbiegung erfährt, die einerseits zu Kantenträgern - Belastung der Buchsenkante - und andererseits zu einem stoßartigen Einströmen des flüssigen Mediums in den sich auftuenden Spalt zwischen Welle und Buchse führt.

Aus der DE-PS 22 61 789 ist ein Maschinenteil mit Überzug zur Verhinderung von chemischem Verschleiß bekannt. Zur Überprüfung wird eine Lagerprüfmaschine beschrieben, die mit einer Prüfwelle ausgestattet ist, auf der eine auswechselbare, mit Schiebesitz versehene Stahlbuchse aufgesteckt ist. Auf der Stahl- bzw. Prüfbuchse sitzen zwei Pleuellager mit Pleuel. Um ein Relativverdrehen der Prüfbuchse gegenüber der Prüfwelle zu verhindern, ist die Buchse zusätzlich durch Nut und Feder gesichert. Mittels auswechselbarer Unwuchtscheiben lässt sich eine mehr oder weniger große Vibration auf die festsitzende Prüfbuchse durch die in Drehung versetzte Prüfwelle erzeugen. Hinweise auf eine Überprüfung der Haftfestigkeit von auf der Innenseite von Gleitlagerbuchsen angebrachten Gleitschichten unter gezielter Anwendung und Einströmung eines flüssigen Mediums wird in dieser Patentschrift nicht erläutert.

Auch die DE 28 40 425 C3 beschreibt lediglich einen Gleitlagerprüfstand, bei dem für die Versuche jeweils einzelne Gleitlagerhälften im Unterteil der Lageraufnahme montiert werden. Zur Einstellung der Prüfbedingungen wird nur die obere unbehandelte Gleitlagerhälfte statisch belastet. Durch ein größeres Lagerspiel in der zu testenden Gleitlagerhälfte wird zusätzlich sichergestellt, dass beim Anlassen der Zapfen nicht mit der Testschale in mechanische Berührung kommt. Nach Einstellung der Testbedingungen wird durch Wechsel der Lastrichtung über einen Hebelarm an der Lageraufnahme die zu testende Gleitlagerhälfte mittels eines stufenlos einstellbaren Hydraulikzylinders statisch belastet.

Weitere Verfahren und Vorrichtungen des Stand der Techniks sind z.B. aus DE 196 50 616 A1, US 5 239 864 A und DE 44 10 639 A1 bekannt.

Es ist daher Aufgabe der Erfindung, ein Verfahren und eine Vorrichtung bereitzustellen, mit denen die Haftfestigkeit von Gleitschichten von Gleitlagerbuchsen bei stoßartigen Belastungen auf einfache Weise überprüft werden kann.

Verfahrensmäßig wird die Aufgabe durch folgende Schritte gelöst:
- Es wird ein Spiel zwischen der zu prüfenden Gleitlagerbuchse und einem sich durch die Buchse erstreckenden entweder ortsfesten oder rotierenden und/oder oszillierenden Stift vorgegeben,
- in den Spalt zwischen der Gleitlagerbuchse und dem Stift wird ein flüssiges Medium zugeführt,
- Gleitlagerbuchse und Stift werden relativ zueinander senkrecht zur Buchsenachse für eine vorgegebene Zeit mit einer vorgegebenen Kraft oszillierend gegeneinander bewegt und
- die Gleitlagerbuchse wird nach dem Belastungstest auf Beschädigungen der Gleitschicht untersucht.

Das Verfahren ermöglicht die Überprüfung der Haftfestigkeit der Gleitschicht im besonders beanspruchten Kantenbereich der Gleitlagerbuchse. Durch die oszillierende Kraft senkrecht zur Buchsenachse wird der Stift durchgebogen, so dass er abwechselnd an den Buchsenkanten anliegt bzw. an den Buchsenkanten einen Spalt freigibt, in den das flüssige Medium stoßartig einströmt. Die Buchsenkanten werden dadurch einer permanenten Wechselbeanspruchung aus radialer Belastung, Entlastung und Strömungsbelastung durch das flüssige Medium in axialer Richtung ausgesetzt. Wenn die Haftfestigkeit der Gleitschicht in diesen Bereichen gewährleistet ist, ist auch die Haftfestigkeit in den übrigen Bereichen der Gleitlagerbuchse gegeben. Es wird mit diesem Verfahren eine Extrembelastung von Gleitlagerbuchsen simuliert, wie sie beispielsweise in Dieseleinspritzpumpen auftritt.

Die Kraft wird entsprechend dem Einsatzzweck der Gleitlagerbuchse gewählt. Beispielsweise kann mit einer niedrigen Kraft begonnen und diese dann stufenweise erhöht werden, wobei zwischen den Testphasen die Gleitlagerbuchse gegebenenfalls ausgebaut und überprüft wird. Auf diese Weise lässt sich eine maximale zulässige Belastung ermitteln, bei der sich die Gleitschicht noch nicht ablöst. Dieses Verfahren wird vorzugsweise im Kraftbereich von 2 kN bis 60 kN, insbesondere von 10 bis 50 kN, besonders bevorzugt im Bereich von 20 bis 40 kN durchgeführt.

Die Kraft wird vorzugsweise sinusförmig ausgeübt, was den meisten Einsatzbedingungen am nächsten kommt.

Auch kann auf einfache Weise das Spiel eingestellt werden, indem für die zu untersuchende Gleitlagerbuchse Stifte mit unterschiedlichen Außendurchmessern bereitgehalten werden. Das Spiel wird vorzugsweise im Bereich von 30 µm bis 500 µm für Gleitlagerbuchsen mit Außendurchmessern von 10 bis 30 mm eingestellt. Bevorzugte Werte innerhalb dieses Spielbereiches sind 30 µm bis 300 µm und 30 µm bis 100 µm.

Die Länge der zu überprüfenden Gleitlagerbuchsen liegt beispielsweise im Bereich von 10 bis 30 mm.

Der Stift kann ortsfest angeordnet sein, es ist jedoch bevorzugt, dass der Stift eine oszillierende Rotation mit einer Frequenz von 5 bis 15 Hz ausführt. Bevorzugte Frequenzen sind 8 bis 12 Hz, insbesondere 9 bis 10 Hz. Bei der oszillierenden Rotation des Stiftes wird die Bewegung vorzugsweise über einen Winkelbereich von bis zu 20°, insbesondere bis zu 15° ausgeführt.

Anstelle einer oszillierenden Rotation ist auch eine Permanent-Rotation möglich, wobei 5 Umdrehungen pro Minute bis 15 Umdrehungen pro Minute bevorzugt sind.

Die Untersuchungen können mit flüssigen Medien unterschiedlicher Viskosität durchgeführt werden. Vorzugsweise werden flüssige Medien mit Viskositäten von 0,2 bis 8 mPa•s, vorzugsweise 1 bis 5 mPa•s durchgeführt, wobei diese Werte sich auf eine Temperatur von 100°C beziehen.

Ein bevorzugter Temperaturbereich, in dem die Überprüfung der Gleitlagerbuchse durchgeführt wird, liegt bei 20°C bis 250°C, vorzugsweise im Bereich von 100°C bis 150°C.

Es hat sich gezeigt, dass je nach Buchsengröße, Gleitschichtmaterial, Viskosität des flüssigen Mediums, Spiel und Temperatur 10 bis 60 Minuten für eine Testphase ausreichen. Weitere bevorzugte Zeitdauern sind 20 bis 50 Minuten, 25 bis 35 Minuten, besonders bevorzugt 30 Minuten.

Als flüssige Medien werden vorzugsweise Hydrauliköl, Motoröl, Dieselkraftstoff oder Dieselersatzöl verwendet.

Vorrichtungsmäßig wird die Aufgabe mit einer Vorrichtung gelöst, die folgende Komponenten aufweist:
- Ein Stift, der mit seinen beiden Enden in einer Stiftaufnahme drehbar gelagert ist und an dem eine erste Antriebseinrichtung angeordnet ist,
- eine Buchsenaufnahme, in der die zu überprüfende Gleitlagerbuchse mit Press-Sitz einsetzbar ist, wobei der Stift mit vorgegebenem Spiel in der Gleitlagerbuchse gelagert ist,
- Mittel zur Ausführung einer oszillierenden Relativbewegung von Buchsenaufnahme und Stiftaufnahme, und
- Mittel zur Zuführung eines flüssigen Mediums in den Spalt zwischen Stift und Gleitlagerbuchse.

Die Relativbewegung kann auf verschiedene Arten ausgeführt werden.

Gemäß einer ersten Ausführungsform ist die Stiftaufnahme ortsfest angeordnet und die Buchsenaufnahme ist mit einer zweiten Antriebseinrichtung zur Ausführung der oszillierenden Bewegung verbunden.

Dies bedeutet, dass die Belastung über die Bewegung der Buchsenaufnahme ausgeübt wird. Dadurch, dass die Stiftaufnahme ortsfest angeordnet ist, wird durch die Belastung über die Buchse eine Durchbiegung des Stiftes herbeigeführt. Die oszillierende Bewegung wird vorzugsweise unter gleichzeitiger Rotation bzw. oszillierender Rotation des Stiftes durchgeführt.

Gemäß einer zweiten Ausführungsform ist die Buchsenaufnahme ortsfest angeordnet und die Stiftaufnahme ist mit einer zweiten Antriebseinrichtung zur Ausführung der oszillierenden Bewegung verbunden.

Diese zweite Antriebseinrichtung kann z. B. ein Kraftzylinder sein, der an der Buchsenaufnahme oder an der Stiftaufnahme angreift und eine oszillierende Bewegung ausführt, die zu einer Axialbelastung der Buchse und somit zu einer Verformung des Stiftes führt.

Um die Verformung bzw. Durchbiegung des Stiftes auf einfache Weise herbeiführen zu können, ist der Stift hohl ausgebildet. Dadurch wird eine größere Elastizität des Stiftes bewirkt. Über unterschiedliche Wanddicken des rohrförmigen Stiftes können bei gleicher Belastung unterschiedliche Durchbiegungen des Stiftes realisiert werden. Es ist dadurch auf einfache Weise möglich, durch Austausch von Stiften mit unterschiedlichen Wandstärken bei gleichen Belastungen unterschiedliche Verfahrensbedingungen einzustellen.

Um die auf die Buchse einwirkende Kraft messen zu können, ist vorzugsweise die jeweils ortsfeste Aufnahme mit einer Kraftmeßeinrichtung ausgestattet bzw. eine Kraftmeßeinrichtung ist an der ortsfesten Aufnahme angeordnet.

Beispielhafte Ausführungsformen der Erfindung werden nachfolgend anhand der Zeichnungen näher erläutert.

Es zeigen:
- Figur 1: eine schematische Darstellung einer ersten Ausführungsform der Vorrichtung,
- Figur 2: eine schematische Darstellung einer zweiten Ausführungsform der Vorrichtung, und
- Figur 3: eine vergrößerte Darstellung von Gleitlagerbuchse und Stift unter Belastung.

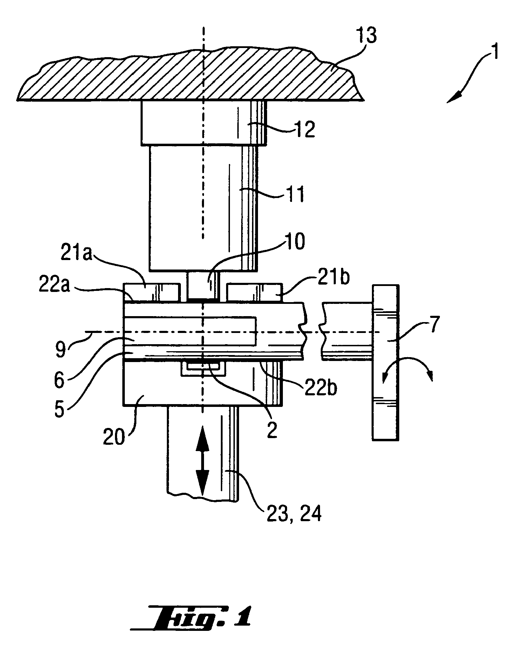

In der Figur 1 ist eine Vorrichtung 1 dargestellt, die eine ortsfeste Traverse 13 aufweist, an der an der Unterseite eine Kraftmeßeinrichtung 12, ein Verbindungselement 11 und eine Buchsenaufnahme 10 angeordnet ist. In der Buchsenaufnahme 10 ist die zu überprüfende Buchse 2 mit Press-Sitz eingesetzt.

Durch die Buchse 2 erstreckt sich ein Stift 5, der einen Hohlraum 6 aufweist. Der Hohlraum 6 erstreckt sich vom linken Ende des Stiftes 5 bis über den Bereich der zu überprüfenden Buchse hinaus. Der Stift 5 ist in einer Buchsenaufnahme 20 gelagert, die U-förmig ausgebildet ist. Die Lager 22a,b des Stiftes 5 befinden sich in den beiden Schenkeln 21 a und 21 b, die senkrecht nach oben aufragen. Die Lager 22a,b ermöglichen eine Rotationsbewegung des Stiftes 5. Zu diesem Zweck ist der Stift am rechten Ende mit einer ersten Antriebseinrichtung 7 verbunden. Diese Antriebseinrichtung 7 ist dazu ausgebildet, dass der Stift eine Rotationsbewegung ausführt, die auch oszillierend sein kann.

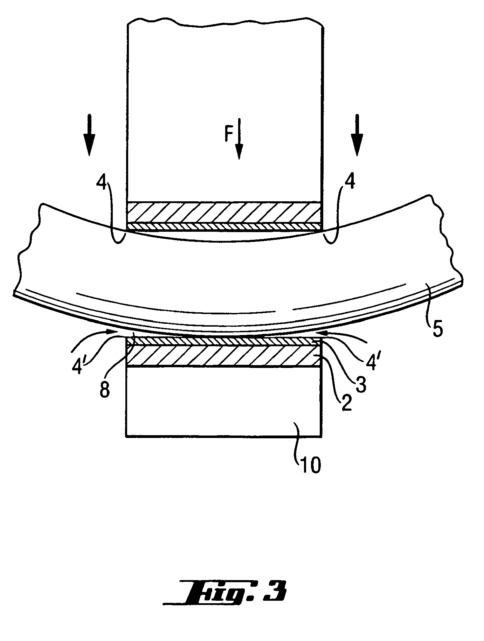

Die Stiftaufnahme 20 ist am unteren Ende mit einer zweiten Antriebseinrichtung 23 versehen, die als Kraftzylinder 24 ausgebildet ist. Dieser Kraftzylinder 24 führt eine durch die Pfeile gekennzeichnete Hub- und Senkbewegung aus, so dass der Stift 5 in der zu überprüfenden Buchse 2 oszillierend senkrecht zur Buchsenachse 9 bewegt werden kann. Da die Buchse 2 ortsfest angeordnet ist, führt dies zu einer Durchbiegung des Stiftes 5, wie im Zusammenhang mit der Figur 3 erläutert wird.

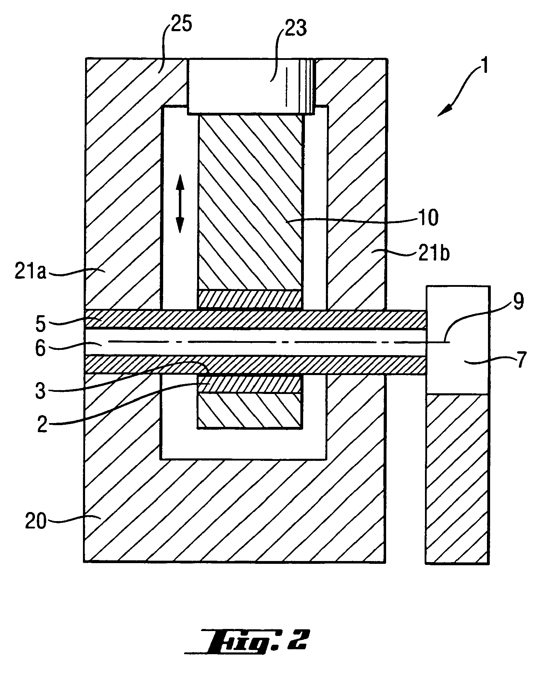

In der Figur 2 ist eine weitere Ausführungsform der Vorrichtung 1 dargestellt. Diese Ausführungsform unterscheidet sich von der in Figur 1 gezeigten Ausführungsform dadurch, dass die Stiftaufnahme 20 ortsfest ausgeführt ist, und dass die Buchsenaufnahme 10 mit einer zweiten Antriebseinrichtung 23 verbunden ist, die sich in der Traverse 25 der Stiftaufnahme 20 befindet. Auch diese zweite Antriebseinrichtung 23 kann in Form eines Kraftzylinders ausgeführt sein, der die Buchsenaufnahme 10 oszillierend auf- und abbewegt und somit die Gleitlagerbuchse 2 gegen den ortsfest angeordneten Stift 5 senkrecht zur Achse 9 der Gleitlagerbuchse drückt. Der Begriff ortsfest in Verbindung mit dem Stift 5 bedeutet, dass der Stift 5 bezüglich vertikaler Bewegungen festgelegt ist und lediglich Rotationsbewegungen ausführen kann. Hierzu ist der Stift am rechten Ende mit einer ersten Antriebseinrichtung 7 verbunden. In der hier gezeigten Ausführungsform ist der Stift 5 als Rohr mit dem Hohlraum 6 ausgeführt.

In der Figur 3 ist eine Buchse 2 mit einer Gleitschicht 3 dargestellt, die in einer Buchsenaufnahme 10 angeordnet ist. Die Buchsenaufnahme 10 wird in der in Figur 3 dargestellten Position nach unten bewegt, so dass der Stift 5 nach unten durchgebogen wird. Die Durchbiegung ist in der Figur 3 übertrieben dargestellt, um zu zeigen, dass die Gleitlagerbuchse an den Buchsenkanten 4 am Stift 5 anliegt, wobei an der unteren Seite sich ein Spalt 8 zwischen dem Stift 5 und der Gleitschicht 3 auftut, so dass das flüssige Medium ― wie durch die Pfeile gekennzeichnet ist ― in den Spalt einströmen kann. Das flüssige Medium wird vorzugsweise nicht mit erhöhtem Druck zugeführt, sondern lediglich mit Gravitationsdruck.

Wenn die Buchsenaufnahme 10 nach oben bewegt wird, wird der Spalt 8 geschlossen und der Stift 5 nach oben durchgebogen mit der Folge, dass der Stift an den unteren Buchsenkanten 4' anliegt. Das im Spalt 8 befindliche flüssige Medium wird hierbei stoßartig aus dem Spalt 8 herausgedrückt. Gleichzeitig wird im oberen Bereich an den Kanten 4 ein entsprechender Spalt gebildet, in den das flüssige Medium stoßartig einströmt.

### Bezugszeichenliste

- 1: Vorrichtung
- 2: Gleitlagerbuchse
- 3: Gleitschicht
- 4, 4': Buchsenkante
- 5: Stift
- 6: Hohlraum
- 7: erste Antriebseinrichtung
- 8: Spalt
- 9: Buchsenachse
- 10: Buchsenaufnahme
- 11: Verbindungselement
- 12: Kraftmeßeinrichtung
- 13: Traverse

- 20: Stiftaufnahme
- 21 a,b: Schenkel
- 22a,b: Lager
- 23: zweite Antriebseinrichtung
- 24: Kraftzylinder
- 25: Traverse

## Patentansprüche

1. Verfahren zur Überprüfung der Haftfestigkeit von auf der Innenseite von Gleitlagerbuchsen angebrachten Gleitschichten mit folgenden Schritten:
- es wird ein Spiel zwischen der zu prüfenden Gleitlagerbuchse und einem sich durch die Gleitlagerbuchse erstreckenden entweder ortsfesten oder rotierenden und/oder oszillierenden Stift vorgegeben,
- in den Spalt zwischen der Gleitlagerbuchse und dem Stift wird ein flüssiges Medium zugeführt,
- Gleitlagerbuchse und Stift werden relativ zueinander senkrecht zur Buchsenachse für eine vorgegebene Zeit mit einer vorgegebenen Kraft oszillierend gegeneinander bewegt und
- die Gleitlagerbuchse wird nach dem Belastungstest auf Beschädigungen der Gleitschicht untersucht.

2. Verfahren nach Anspruch 1, wobei ein Spiel von 30 µm bis 500 µm bei Gleitlagerbuchsen mit einem Außendurchmesser von 10 bis 30 mm eingestellt wird.

3. Verfahren nach einem der Ansprüche 1 oder 2, wobei Gleitlagerbuchsen mit einer Buchsenlänge von 10 bis 30 mm überprüft werden.

4. Verfahren nach einem der Ansprüche 1 bis 3, wobei die vorgegebene Kraft 2 kN bis 60 kN beträgt.

5. Verfahren nach einem der Ansprüche 1 bis 4, wobei die vorgegebene Kraft sinusförmig ausgeübt wird.

6. Verfahren nach einem der Ansprüche 1 bis 5, wobei der Stift eine oszillierende Rotation mit einer Frequenz von 5 bis 15 Hz ausführt.

7. Verfahren nach Anspruch 6, wobei der Stift eine oszillierende Rotation um einen Winkel von bis zu ±20° ausführt.

8. Verfahren nach einem der Ansprüche 1 bis 7, wobei flüssige Medien mit Viskositäten von 0,2 bis 8 mPa•s verwendet werden, wobei diese Viskositätswerte auf eine Temperatur von 100°C bezogen sind.

9. Verfahren nach einem der Ansprüche 1 bis 8, wobei flüssige Medien im Temperaturbereich von 20°C bis 250°C verwendet werden.

10. Verfahren nach einem der Ansprüche 1 bis 9, wobei die vorgegebene Zeitdauer 10 bis 60 Minuten, insbesondere 20 bis 50 Minuten beträgt.

11. Verfahren nach einem der Ansprüche 1 bis 10, wobei als flüssige Medien Hydrauliköl, Motoröl, Dieselkraftstoff oder Dieselersatzöl verwendet werden.

12. Vorrichtung zur Überprüfung der Haftfestigkeit von auf der Innenseite von Gleitlagerbuchsen (2) angebrachten Gleitschichten (3) mit
- einem Stift (5), der mit seinen beiden Enden in einer Stiftaufnahme (20) drehbar gelagert ist und an dem eine erste Antriebseinrichtung (7) angeordnet ist,
- einer Buchsenaufnahme (10), in der die zu überprüfende Gleitlagerbuchse (2) mit Press-Sitz einsetzbar ist, wobei der Stift (5) mit vorgegebenem Spiel in der Gleitlagerbuchse (2) gelagert ist,
- Mittel zur Ausführung einer oszillierenden Relativbewegung von Buchsenaufnahme (10) und Stiftaufnahme (20) und
- Mittel zur Zuführung eines flüssigen Mediums in den Spalt (8) zwischen Stift (5) und Gleitlagerbuchse (2).

13. Vorrichtung nach Anspruch 12, wobei die Stiftaufnahme (20) ortsfest angeordnet ist und die Buchsenaufnahme (10) mit einer zweiten Antriebseinrichtung (23) zur Ausführung der oszillierenden Bewegung verbunden ist.

14. Vorrichtung nach Anspruch 12, wobei die Buchsenaufnahme (10) ortsfest angeordnet ist und die Stiftaufnahme (20) mit einer zweiten Antriebseinrichtung (23) zur Ausführung der oszillierenden Bewegung verbunden ist.

15. Vorrichtung nach einem der Ansprüche 13 oder 14, wobei die jeweils ortsfeste Aufnahme (10, 20) eine Kraftmeßeinrichtung (12) aufweist.

16. Vorrichtung nach einem der Ansprüche 12 bis 15, wobei die zweite Antriebseinrichtung (23) ein Kraftzylinder (24) ist.

17. Vorrichtung nach einem der Ansprüche 12 bis 16, wobei der Stift (5) hohl ist.

## Claims

1. Method for checking the adhesive strength of sliding layers applied to the inside of plain bearing bushes, having the following steps:
- a clearance is specified between the plain bearing bush to be tested and a pin which extends through the plain bearing bush and which is either stationary or rotating and/or oscillating,
- a fluid medium is fed into the gap between the plain bearing bush and the pin,
- the plain bearing bush and the pin are moved relative to each other perpendicularly to the bush axis for a specified time with a specified force so as to oscillate relative to each other and
- the plain bearing bush is examined for damage to the sliding layer after the loading test.

2. Method according to claim 1, wherein a clearance of from 30 µm to 500 µm is set in the case of plain bearing bushes having an outside diameter of from 10 to 30 mm.

3. Method according to either claim 1 or claim 2, wherein plain bearing bushes having a bush length of from 10 to 30 mm are checked.

4. Method according to any one of claims 1 to 3, wherein the specified force is from 2 kN to 60 kN.

5. Method according to any one of claims 1 to 4, wherein the specified force is exerted in a sinusoidal manner.

6. Method according to any one of claims 1 to 5, wherein the pin performs an oscillating rotation with a frequency of from 5 to 15 Hz.

7. Method according to claim 6, wherein the pin performs an oscillating rotation through an angle of up to ±20°.

8. Method according to any one of claims 1 to 7, wherein fluid media having viscosities of from 0.2 to 8 mPa•s are used, these viscosity values relating to a temperature of 100°C.

9. Method according to any one of claims 1 to 8, wherein fluid media in a temperature range of from 20°C to 250°C are used.

10. Method according to any one of claims 1 to 9, wherein the specified time period is from 10 to 60 minutes, especially from 20 to 50 minutes.

11. Method according to any one of claims 1 to 10, wherein hydraulic oil, engine oil, diesel fuel or diesel oil substitute are used as the fluid media.

12. Apparatus for checking the adhesive strength of sliding layers (3) applied to the inside of plain bearing bushes (2), having
- a pin (5) which is rotatably supported with its two ends in a pin holder (20) and on which a first drive device (7) is arranged,
- a bush holder (10) in which the plain bearing bush (2) to be checked is insertable with a press fit, the pin (5) being supported with specified clearance in the plain bearing bush (2),
- means for performing an oscillating relative movement of the bush holder (10) and the pin holder (20) and
- means for feeding a fluid medium into the gap (8) between the pin (5) and the plain bearing bush (2).

13. Apparatus according to claim 12, wherein the pin holder (20) is arranged in a stationary manner and the bush holder (10) is connected to a second drive device (23) for performing the oscillating movement.

14. Apparatus according to claim 12, wherein the bush holder (10) is arranged in a stationary manner and the pin holder (20) is connected to a second drive device (23) for performing the oscillating movement.

15. Apparatus according to either claim 13 or claim 14, wherein the relevant stationary holder (10, 20) has a force-measuring device (12).

16. Apparatus according to any one of claims 12 to 15, wherein the second drive device (23) is a force cylinder (24).

17. Apparatus according to any one of claims 12 to 16, wherein the pin (5) is hollow.

## Revendications

1. Procédé de vérification de l'adhérence de couches de glissement montées sur le côté intérieur de coussinets lisses comportant les étapes suivantes :
- un jeu entre le coussinet lisse à vérifier et une goupille oscillante et/ou rotative ou fixe s'étendant par le coussinet lisse est prescrit,
- un produit liquide est amené dans la fente entre le coussinet lisse et la goupille,
- le coussinet lisse et la goupille sont déplacés de manière oscillante l'un contre l'autre, l'un par rapport à l'autre perpendiculairement à l'axe de coussinet pour un temps prescrit avec une force prescrite et
- les endommagements de la couche de glissement du coussinet lisse sont examinés après le test de contrainte.

2. Procédé selon la revendication 1, dans lequel un jeu de 30 µm à 500 µm est réglé pour des coussinets lisses dotés d'un diamètre extérieur de 10 à 30 mm.

3. Procédé selon l'une quelconque des revendications 1 ou 2, dans lequel des coussinets lisses dotés d'une longueur de coussinet de 10 à 30 mm sont vérifiés.

4. Procédé selon l'une quelconque des revendications 1 à 3, dans lequel la force prescrite est comprise entre 2 kN et 60 kN.

5. Procédé selon l'une quelconque des revendications 1 à 4, dans lequel la force prescrite est exercée de manière sinusoïdale.

6. Procédé selon l'une quelconque des revendications 1 à 5, dans lequel la goupille réalise une rotation oscillante à une fréquence de 5 à 15 Hz.

7. Procédé selon la revendication 6, dans lequel la goupille réalise une rotation oscillante autour d'un angle de ± 20 ° au maximum.

8. Procédé selon l'une quelconque des revendications 1 à 7, dans lequel des produits liquides avec des viscosités de 0,2 à 8 mPa s sont utilisés, ces valeurs de viscosité se rapportant à une température de 100 °C.

9. Procédé selon l'une quelconque des revendications 1 à 8, dans lequel des produits liquides sont utilisés dans la plage de température comprise entre 20 °C et 250 °C.

10. Procédé selon l'une quelconque des revendications 1 à 9, dans lequel la durée prescrite est comprise entre 10 et 60 minutes, en particulier 20 et 50 minutes.

11. Procédé selon l'une quelconque des revendications 1 à 10, dans lequel de l'huile hydraulique, de l'huile de moteur, du gazole ou une huile de substitution au gazole sont utilisés comme produits liquides.

12. Dispositif de vérification de l'adhérence de couches de glissement (3) montées sur le côté intérieur de coussinets lisses (2) avec
- une goupille (5) qui est logée à rotation avec ses deux extrémités dans un logement de goupille (20) et sur laquelle est disposé un premier dispositif d'entraînement (7),
- un logement de coussinet (10), dans lequel le coussinet lisse (2) à vérifier peut être inséré en ajustement serré, la goupille (5) étant logée avec un jeu prescrit dans le coussinet lisse (2),
- des moyens pour la réalisation d'un mouvement relatif oscillant de logement de coussinet (10) et de logement de goupille (20) et
- des moyens pour l'amenée d'un produit liquide dans la fente (8) entre la goupille (5) et le coussinet lisse (2).

13. Dispositif selon la revendication 12, dans lequel le logement de goupille (20) est disposé de manière fixe et le logement de coussinet (10) est relié à un second dispositif d'entraînement (23) pour la réalisation du mouvement oscillant.

14. Dispositif selon la revendication 12, dans lequel le logement de goupille (10) est disposé de manière fixe et le logement de goupille (20) est relié à un second dispositif d'entraînement (23) pour la réalisation du mouvement oscillant.

15. Dispositif selon l'une quelconque des revendications 13 ou 14, dans lequel le logement (10, 20) respectivement fixe présente un dynamomètre (12).

16. Dispositif selon l'une quelconque des revendications 12 à 15, dans lequel le second dispositif d'entraînement (23) est un cylindre de force (24).

17. Dispositif selon l'une quelconque des revendications 12 à 16, dans lequel la goupille (5) est creuse.
